# EUROPÄISCHE PATENTANMELDUNG

(11) **EP 4 197 319 A1**
(43) Veröffentlichungstag der Anmeldung: **21.06.2023**
(21) Anmeldenummer: 22000259.6
(22) Anmeldetag: 13.12.2022
(51) Int. Cl.: A01K 1/00

(54) **SELBSTTRAGENDES VORDACH AN EINEM NUTZRAUM AN EINEM MOBILEN HÜHNERSTALL**

(30) Priorität: 15.12.2021 AT 12121 U
(71) Anmelder: Steiner Automation GmbH & Co.KG, 5122 Hochburg / Ach (AT)
(72) Erfinder: Steiner, Johann Markus, 5122 Hochburg / Ach (AT)

(57) **Zusammenfassung**

Die Erfindung beschreibt ein Vordach (1) für einen Nutzraum (2) an einem mobilen Hühnerstall. Ein Vordach (1) bietet Schutz vor Regen, Sonne, Wind und auch Greifvögeln und soll bevorzugt selbsttragend, ohne Befestigung im Erdboden ausgeführt sein, um mit wenig Arbeitsaufwand die Position des Hühnerstalls verändern zu können.

Die selbsttragende Befestigung wird durch Hebelelemente (3), welche das Vordach (1) am oberen Ende fixieren und über den unteren Rand des Nutzraums (2) hinausragen und am unteren Ende mit Spannelementen (4) am Nutzraum (2) oder Hühnerstall befestigt sind, realisiert.

Durch die selbsttragende Befestigung ist eine Positionsänderung des gesamten Aufbaus ohne zusätzliche Arbeiten am Vordach (1) möglich.

## Beschreibung

Die Erfindung betrifft ein Vordach an einem Nutzraum an einem mobilen Hühnerstall. Ein Vordach bietet Schutz vor Regen, Sonne wie auch Greifvögeln und soll bevorzugt selbsttragend, ohne Befestigung im Boden ausgeführt sein, um mit wenig Arbeitsaufwand die Position des Hühnerstalls verändern zu können.

Mit der erfindungsgemäßen Ausgestaltung nach dem Anspruch 1 und den folgenden, abhängigen Ansprüchen ist eine am Nutzraum selbstragende Konstruktion des Vordachs beschrieben, wodurch der Hühnerstall ohne zusätzlichen Arbeitsaufwand bewegbar ist.

Bei der Haltung von Hühnern sind fix aufgebaute Stallungen, aber auch mobile Stallungen bekannt. Es ist auch bekannt, sowohl fixe, wie auch mobile Stallungen mit einem zusätzlichen Nutzraum zu versehen. Der zusätzliche Nutzraum kann als Außenklimabereich, umgangssprachlich auch als Wintergarten bezeichnet, oder als normaler zusätzlicher Stallnutzraum ausgeführt werden. Ein Außenklimabereich dient zusätzlichem Tierwohl und ist beispielsweise im Biobereich vorgeschrieben.

Bei bekannten Systemen kommen zwei Ausführungsvarianten für diesen zusätzlichen Nutzraum in Betracht. Einerseits kann der zusätzliche Nutzraum fix auf einem eigenen zweiten Wagen aufgebaut sein. Dies ist erstens in der Manipulation des Stellplatzes aufwändig, da immer zwei Fahrten notwendig sind und zweitens muss es für den Transport vom Hersteller zum Kunden ebenso zwei getrennte Transporte geben. Bei diesen, oft längeren Transportwegen handelt es sich meistens um Sondertransporte, die mit hohen Kosten verbunden sind.

Andererseits sind zusätzliche Nutzräume bekannt, die ähnlich wie Zeltkonstruktionen vor Ort am Stall angebaut werden. Weiters kann der zusätzliche Nutzraum anschwenkbar am mobilen Hühnerstall ausgeführt sein, um die Breite beim Transport zu minimieren.

Ein Großteil der Seitenwände des zusätzlichen Nutzraums ist für eine gute Durchlüftung als Gewebe ausgeführt. Durch die Offenheit des Gewebes ergeben sich zwei Probleme. Einerseits kann bei Regen dieser in den Seitenflächen durch das Gewebe dringen und für Feuchtigkeit im Inneren sorgen. Das führt zu einer Erhöhung der Luftfeuchtigkeit im Nutzraum und somit zu einer Verschlechterung des Raumklimas und der Tiergesundheit. Andererseits ist die zusätzliche Nutzfläche für Greifvögel gut sichtbar, sodass diese eventuell das Gewebe beschädigen und bei starker Beschädigung in den Nutzraum eindringen können und Tiere verletzen oder töten.

Dies lässt sich durch ein Vordach, welches im Wesentlichen die schräge Dachfläche des Nutzraums verlängert verbessern. Ein Vordach bietet Schutz vor Regen, weiters dient es bei Sonneneinstrahlung auch als Schattenspender und Windschutz, sowie als Sichtschutz vor Greifvögeln.

Bekannt ist ein derartiges Vordach, welches mit Bodenankern im Boden befestigt wird, um entsprechend wind- und wetterfest zu sein. Durch die Befestigung im Boden ist es notwenig bei jeder Positionsänderung des Hühnerstalls, die Befestigung im Boden zu lösen und an der neuen Stellposition erneut aufwändig im Boden zu verankern.

Die Erfindung dient dazu, ein einfach aufzubauendes Vordach, welches bei Positionsänderungen nicht abgebaut werden muss, zu konstruieren.

Gelöst wird diese Aufgabe durch ein selbsttragendes Vordach, bei dem alle Befestigungspunkte am Nutzraum oder Hühnerstall angebracht sind, wie in Anspruch 1 und den folgenden abhängigen Ansprüchen beschrieben.

Die Erfindung wird anhand eines möglichen Beispiels genauer beschrieben. Dabei wird auf den Hühnerstall und den zusätzlichen Nutzraum als solches nicht eingegangen, da einerseits verschiedenste Ausführungen möglich sind und andererseits diese im Stand der Technik beschrieben sind. Die Erfindung ist bei fixen und bevorzugt bei mobilen Hühnerställen mit einem zusätzlichen Nutzraum anwendbar.

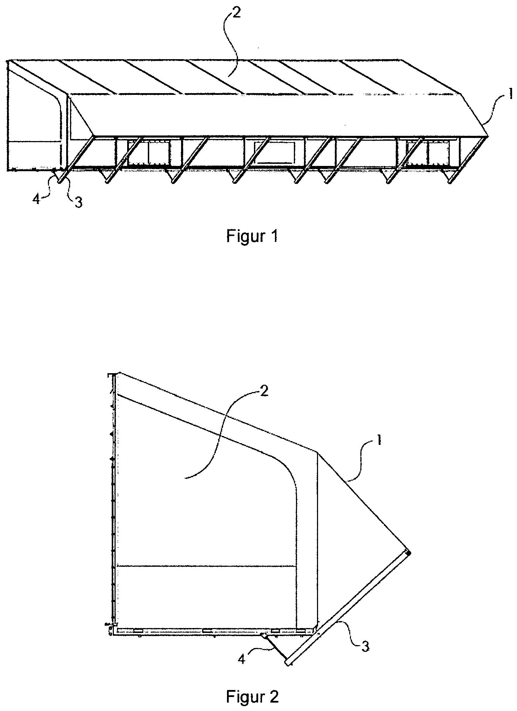

Eine mögliche selbsttragende Konstruktion eines Vordachs wird anhand der Figuren 1 und 2 beschrieben.

### Dabei bezeichnet:

- 1: Vordach
- 2: Nutzraum
- 3: Hebelelement
- 4: Spannelement

In der Figur 1 ist eine Iso-Ansicht des Vordachs (1) bei einem zusätzlichen Nutzraums (2) sowie den zur selbsttragenden Befestigung vorgesehenen Hebelelementen (3) und Spannelementen (4) zu sehen.

In der Figur 2 ist eine Seitenansicht dieser Ausführungsform zu sehen.

Das erfindungsgemäße Vordach (1) wird durch Hebelelemente (3), die im Bodenbereich der Nutzraumkonstruktion (2) drehbar aufliegen und über diese hinausragen durch Spannelemente (4), die am Ende angreifen und im Boden des Nutzraums (2) oder des Hühnerstalls befestigt werden, fixiert.

Der das Vordach (1) bildende Folienbereich ist entweder einteilig mit der Dachfolie des Nutzraums (2) ausgeführt oder an dieser stoffschlüssig durch Schweißen oder Kleben verbunden. Eine dritte Möglichkeit ist, das Vordach (1) als eigenen Teil auszuführen und mit der Nutzraumkonstruktion (2) im oberen Bereich durch Schrauben, Klemmen oder mit Keder und Kederschiene zu verbinden.

An dem äußeren Ende des Vordachs (1) wird die Folie mit Hebelelementen (3) verbunden, die die Folie spannen, damit einerseits das Regenwasser ungehindert abfließen kann und andererseits die Folie windsicher stabilisiert ist. Diese Hebelelemente (3) ragen über den Bodenbereich des Nutzraums (2), welcher vom Erdboden beabstandet ist hinaus und sind im Bodenbereich des Nutzraums (2) drehbar auf der Kante des Nutzraums (2) gelagert. Am unteren Ende der Hebelelemente (3) sind diese mit Spannelementen (4) verbunden, welche auf der Nutzraumunterseite (2) oder am Hühnerstall befestigt sind. Durch das Überragen der Hebelelemente (3) werden diese durch die Spannelemente (4) im oberen Bereich nach außen gedrückt, um das Vordach (1) zu spannen. Die Spannelemente (4) können aus einem Gurt, welcher mit einer Festzurrratsche oder einer anderen Vorrichtung gespannt wird, ausgeführt sein. Eine weitere Ausführung der Spannelemente (4) kann eine Feder oder eine Gewindestange sein.

Dadurch, dass das Vordach (1) einerseits am Dach des Nutzraums (2) stoff- oder formschlüssig fixiert ist und andererseits durch Hebelelemente (3) nach außen gedrückt wird, sowie die Hebelelemente (3) wieder durch am Nutzraum (2) oder am Hühnerstall befestigte Spannelemente (4) nach außen gedrückt werden, ergibt sich eine selbsttragende Konstruktion, welche beliebig ortsverändert werden kann, da keine Befestigungsmittel in den Erdboden ragen.

Ebenso ist es möglich, die Hebelelemente (3) selbst einer entsprechenden Durchbiegung zu unterziehen. Durch diese Durchbiegung der Hebelelemente (3) im elastischen Bereich, ist es möglich eine Belastung durch Windböen besser aufzunehmen. Falls die Spannelemente (4) elastisch ausgeführt sind, beispielsweise über einen elastischen Gurt oder eine Feder kann diese dämpfende Wirkung auch von den Spannelementen (4) übernommen werden und die Hebelelemente (3) können hier auch starr ausgeführt sein.

Die Hebelelemente (3) können im Drehpunkt, also dort, wo diese den Nutzraum (2) im Bodenbereich berühren, mit einer geometrischen Ausnehmung oder einer geometrischen Erhöhung ausgeführt sein um den Drehpunkt exakt zu definieren. Die geometrische Ausnehmung kann beispielsweise eine Einkerbung sein, die den Drehpunkt vorgibt. Bei einer geometrischen Erhöhung wird der Querschnitt der Hebelelemente (3) nicht geschwächt und kann beispielsweise durch zwei angebrachte Erhöhungen realisiert werden, wo der Drehpunkt dazwischen liegt. Es kann auch am Nutzraum eine U-förmige oder halbkugelförmige Lasche mit einem Durchgangsloch angebracht sein. Dann ist am Hebelelement (3) zumindest ein Durchgangsloch vorgesehen, und der Drehpunkt wird mit einem Bolzen vorgegeben. Durch die Anbringung mehrerer Positionierhilfen als Drehpunkt für die Hebelelemente (1) kann ein unterschiedlicher Anstellwinkel des Vordachs (1) erzielt werden.

Ebenso ist durch die Konstruktion sichergestellt, dass bei einem Anschwenken des Nutzraumbodens zum Hühnerstall nach oben, die Hebelelemente (3) entlastet werden und dadurch nicht nur der Nutzraum (2) an den Hühnerstall anklappt, sondern sich auch ohne Lösen der Spannelemente (4) die Hebelelemente (4) sich seitlich anlegen und das Vordach (1) nach unten klappt, sodass bei Bedarf einer größeren Positionsveränderung des Hühnerstalls sich gleichzeitig die Breite des Nutzraums (2) und des Vordachs (1) verringert. Dieses Anklappen des Nutzraumbodens kann auch genützt werden, um bei der Montage der Spannelemente (4) den Boden des Nutzraums (2) etwas anzuheben. Bei leicht nach oben geklappter Bodenkonstruktion können die Spannelemente (4) dann ohne Kraftaufwand, bzw. Spannung angebracht werden. Erst durch das Absenken des Nutzraumbodens werden die Hebelelemente (3) nach Außen gedrückt und in den Spannelementen (4) die notwendige Spannung erzeugt.

Weiters ist es möglich die Hebelelemente (3) entweder im Bereich der Befestigung des Vordachs (1), und/oder im unteren Bereich der Befestigung mit den Spannelementen (4) untereinander zumindest teilweise mit einem Längsprofil zu verbinden. Dieses Längsprofil ist im Wesentlichen horizontal angebracht. Bei Verwendung eines Längsprofils zur Parallelschaltung der Hebelelemente (3) kann auch nur jedes zweite oder dritte, bzw. zumindest an mindestens zwei Stellen ein Spannelement (4) angebracht werden. Es ist dabei darauf zu achten, dass die notwendige Spannkraft am Vordach (1) aufgebracht wird um sicherzustellen, dass das Vordach (1) nicht durchhängt und/oder durch Wind aus der Verankerung gerissen wird. Dazu sind zumindest 300N, bevorzugt 500N Spannkraft je Laufmeter Vordach (1) aufzubringen.

Sind die Hebelelemente (3) jeden Laufmeter angebracht, sind somit zumindest 300N, bei 1,5m Abstand zumindest 450N je Hebelelement (3) aufzubringen.

## Patentansprüche

1. Vordach (1) aus Planenmaterial für einen Nutzraum (2) an einem mobilen Hühnerstall mit Hebelelementen (3) zur Spannung **dadurch gekennzeichnet, dass** die Hebelelemente (3) zur Spannung der Plane am äußeren, oberen Ende mit dem Vordach (1) verbunden sind, über die Seitenfläche des Nutzraums (2) nach unten ragen, über den unteren Rand des Nutzraums (2) hinausragen und am unteren Ende mit Spannelementen (4) am Boden des Nutzraums (2) oder Hühnerstalls befestigt sind.

2. Vordach (1) nach Anspruch 1, **dadurch gekennzeichnet, dass** die Hebelelemente (3) selbst elastisch vorgespannt werden.

3. Vordach (1) nach Anspruch 1 oder 2, **dadurch gekennzeichnet, dass** die Plane des Vordachs (1) stoffschlüssig mit der Dachplane des Nutzraums (2) verbunden ist.

4. Vordach (1) nach Anspruch 1 oder 2, **dadurch gekennzeichnet, dass** die Plane des Vordachs (1) als eigenes Teil ausgeführt ist und mit Schrauben, Klemmen oder mit Keder und Kederschiene mit der Unterkonstruktion des Nutzraums (2) verbunden ist.

5. Vordach (1) nach Anspruch 1 oder 2, **dadurch gekennzeichnet, dass** die Plane des Vordachs (1) und die Dachplane des Nutzraums (2) einteilig ausgeführt ist

6. Vordach (1) nach mindestens einem der Ansprüche 1 bis 5, **dadurch gekennzeichnet, dass** die Spannelemente (4) durch einen Gurt mit einer Festzurrratsche ausgeführt sind.

7. Vordach (1) nach mindestens einem der Ansprüche 1 bis 5, **dadurch gekennzeichnet, dass** die Spannelemente (4) durch eine Gewindestange ausgeführt sind.

8. Vordach (1) nach mindestens einem der Ansprüche 1 bis 5, **dadurch gekennzeichnet, dass** die Spannelemente (4) durch eine vorgespannte Feder ausgeführt sind.

9. Vordach (1) nach mindestens einem der Ansprüche 1 bis 8, **dadurch gekennzeichnet, dass** die Spannelemente (4) eine Kraft von zumindest 300N je Laufmeter aufbringen.

10. Vordach (1) nach mindestens einem der Ansprüche 1 bis 9, **dadurch gekennzeichnet, dass** der Drehpunkt der Hebelelemente (3) durch zumindest eine geometrische Ausnehmung der Hebelelemente (3) im Auflagepunkt definiert ist.

11. Vordach (1) nach mindestens einem der Ansprüche 1 bis 9, **dadurch gekennzeichnet, dass** der Drehpunkt der Hebelelemente (3) durch zumindest eine geometrische Erhöhung der Hebelelemente (3) im Auflagepunkt definiert ist.

12. Vordach (1) nach mindestens einem der Ansprüche 1 bis 9, **dadurch gekennzeichnet, dass** der Drehpunkt der Hebelelemente (3) durch einen in zumindest einer vorgesehenen Bohrung der Hebelelemente (3) durchgeführten Bolzen definiert ist.

13. Vordach (1) nach mindestens einem der Ansprüche 1 bis 12, **dadurch gekennzeichnet, dass** mehrere Hebelelemente (3) im oberem und/oder unteren Endbereich durch Längsprofile miteinander verbunden sind.
